# NEW EUROPEAN PATENT SPECIFICATION

(11) **EP 1 257 875 B2**
(45) Date of publication and mention of the opposition decision: **11.10.2017**
(45) Mention of the grant of the patent: 12.09.2007
(21) Application number: 00935837.5
(22) Date of filing: 26.04.2000
(51) Int. Cl.: G03B 42/04

(54) **BITE BLOCK FOR DENTAL X-RAY PROCEDURES**
BEISSBLOCK FÜR ZAHNÄRZTLICHE RADIOGRAPHISCHE VERFAHREN
BLOC PORTE-FILM POUR PROCEDURES DE RADIOGRAPHIE DENTAIRE

(30) Priority: 25.02.2000 US 512762; 25.02.2000 WO PCT/US00/05003; 30.03.2000 US 543666
(43) Date of publication of application: 20.11.2002
(73) Proprietor: DENTSPLY International Inc., York, PA 17404-0872 (US)
(72) Inventor: EPPINGER, Hans, Arlington Heights, IL 60005 (US); VISAK, Jerry, Roselle, IL 60172 (US)
(74) Representative: Hartz, Nikolai
(86) International application number: PCT/US2000/011276
(87) International publication number: WO 2001/063357

(56) References cited:
- EP-A- 0 626 613
- FR-A- 2 602 664
- US-A- 4 538 292
- US-A- 6 012 841

## Description

### TECHNICAL FIELD

The present invention is a bite block for use during dental x-ray procedures. More particularly, the invention is a bite block configured to use a variety of x-ray sensors having different widths, lengths or heights. Specifically, the invention is a bite block having at least two main parts adjustably positioned with respect to each other, such that an x-ray sensor is effectively clamped therebetween.

### BACKGROUND OF THE INVENTION

Dental radiographs are made using x-ray examination units, often including an x-ray cone or tube positioned proximate the patient and aligned to take x-rays of certain teeth. Dental x-ray sensors, including films, charge coupled devices or the like, often have a generally flat or plate-like configuration and standardized dimensions so that the sensor can be placed into the oral cavity.

The sensor is placed into the patient's mouth and held in place proximate to the tooth or teeth to be examined. The x-ray's are directed through the target teeth and then through the sensor. It has been found, that proper orientation of the sensor is required to eliminate distortions and improper focus.

To ensure proper orientation of the sensor, sensor carriers or "bite blocks" have been developed. These devices often have a plate for holding the sensor and another plate that the patient bites down on to position the device and the carried sensor. A bite block is shown for example, in U.S. Pat. No. 3,473,026.

Different sensors are often used depending upon the area of the mouth to be examined. This may include for example, anterior, left, right, upper and lower bite wings, and the like. Known bite blocks have been individually designed and manufactured for each different type of sensor. The degree of secured positioning of the sensor in the holder is dictated by the dimensions of the sensor and the holder.

To enable a secure sensor position, holders are often configured to have some sort of pocket or cradle corresponding to the sensor dimensions. The user is required to physically push the sensor into the cradle., Because sensors cannot be sterilized, they have to be protected by a disposable cover prior to their insertion into the sensor holder portion of the bite block. The cover typically consists of a very thin vinyl material.

It has been found that when the covered sensor is pushed into the sensor holder, it is sometimes partially stripped of the vinyl covering. It has also been found that the cover itself sometimes prevents positive feeding of the sensor in the holder portion of the bite block.

A need exists therefore, for a sensor holder which will accommodate different sizes of sensors. A need also exists for such a sensor holder which will eliminate the problems associated with the sensor covers.

Other examples of conventional sensor holders are disclosed in US-A-6 012 841 WO-A-00/49945, and US-A 4 965 885.

### SUMMARY OF THE INVENTION

It is an object of the invention to provide a dental x-ray bite block.

It is another object of the invention to provide a bite block having an x-ray sensor holder.

It is a further object of the invention to provide a bite block having an x-ray sensor holder capable of securely holding and positioning a variety of sensors having different lengths, heights or widths.

It is yet another object of the invention to provide such a bite block which avoids the detrimental problem of stripping portions of the sensor cover when inserted into the bite block sensor holder.

These and other objects of the present invention, as well as the advantages thereof over existing art forms are accomplished by a dental x-ray bite block for securing an x-ray sensor according to claim 1.

Preferred forms of the subject dental bite block are shown by way of example in the accompanying drawings, and are deemed sufficient to effect a full disclosure of the invention. The exemplary bite block is described in detail without attempting to show all of the various forms and modifications in which the invention might be embodied; the bite block according to the invention being measured by the claims and not by the details of the specification.

### BRIEF DESCRIPTION OF THE DRAWINGS

Fig. 1 is a rear elevational view of a bite block according to the invention, showing first and second block sections separated;
Fig. 2 is a side elevational view of the bite block of Fig. 1;
Fig. 3 is a front elevational view of the bite block of Fig. 1;
Fig. 4 is a top plan view of the bite block of Fig. 1, showing the second block section received within the first block section;
Fig. 5 is a side elevational view as in Fig. 4, showing the second bite block received within the first bite block and showing an sensor secured within said bite block;
Fig. 6 is a top plan view of the bite block of Fig. 4;
Fig. 7 is a side elevational view of an alternative embodiment of the bite block of Fig. 1, shown affixed to an x-ray positioning guide arm having a collimator ring affixed thereto;
Fig. 8 is an exploded side elevational view of the guide arm shown in Fig. 7;
Fig. 9 is an enlarged side elevational view of the bite block of Fig. 7, shown with bite block sections disconnected and showing an x-ray sensor;
Fig. 10 is a perspective view of the bite block of 7; and,
Fig. 11 is a top plan view of the first block section of the device of Fig. 1.

### PREFERRED EMBODIMENTS FOR CARRYING OUT THE INVENTION

A bite block embodying the concepts of the present invention is generally designated by the number 10 on the attached drawings. It includes a first block section 11 and a second block section 12. Bite block 10 can be configured from any material conventionally used to make x-ray positioning devices, and is preferably a plastic material.

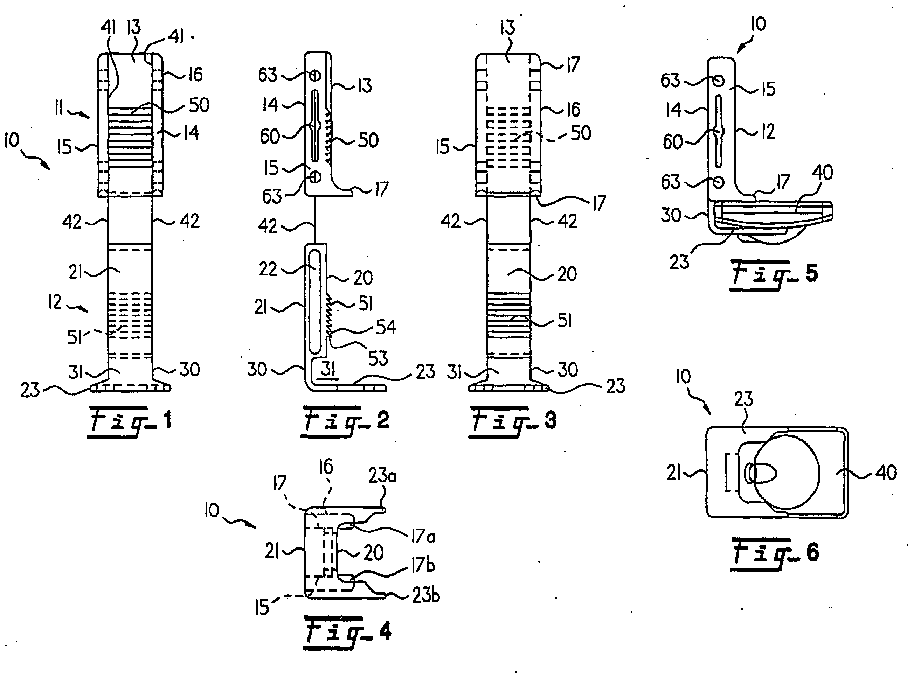

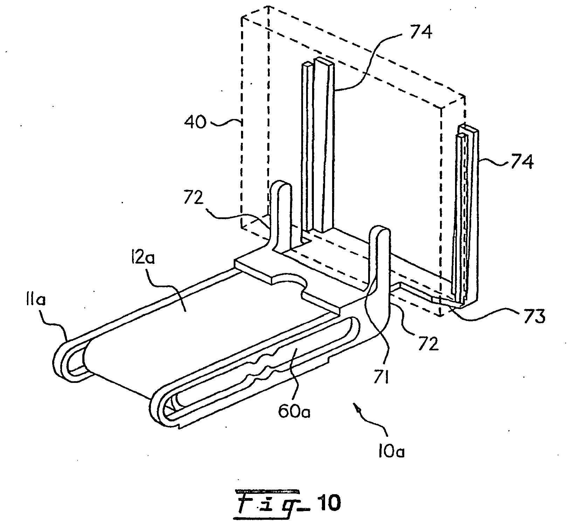

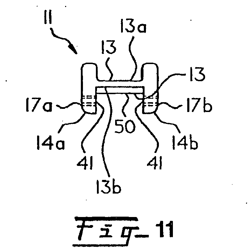

First block section 10 has an upstanding front wall 13 and an upstanding back wall 14 (Figs. 1 and 10). Walls 13 and 14 are preferably arranged in a spaced, parallel arrangement (Fig. 2), such that sides 15 and 16 are positioned therebetween. As shown in Fig. 11, second block section 11 may be configured such that rear wall 14 includes wall sections 14a and 14b. Front wall 13 may also be configured to itself have a front side 13a and a rear side 13b (Fig. 11).

First block section 10 also carries a primary clamp face 17, extending from front wall 13 of first block section 11. Preferably, primary clamp face 17 extends from wall 13 of first block section 11 at a perpendicular or right angle Further, primary clamp face 17 may include primary clamp face arms 17a and 17b (Fig. 4).

Similarly, second block section 12 has a front upstanding wall 20 and an opposing, rear upstanding wall 21. One preferred configuration of second block section 12 has a slot 22 (Fig. 2) between first and second walls 20 and 21 of second block section 12. Second block section 12 has a secondary clamp face 23 extending therefrom, preferably in a right angle to upstanding walls 20 and 21 of second block section 12. As shown in Fig. 4, secondary clamp face 23 may be comprised of separate clamp face arms 23a and 23b.

One configuration of secondary clamp face 23 extends contiguously from rear wall 21 of second block section 12 in a web 30, such that web 30 extends between secondary clamp face 23 and rear wall 21 of second block section 12. Preferably, an open or void area 31 is provided between web 30 and secondary clamp face 23. Primary and secondary clamp faces 17 and 23 are each planar

First and second block sections 11 and 12 are configured to be removably secured to one another in an adjustable position, such that primary and secondary clamp faces 17 and 23 are in a spaced, opposing relationship. The space between primary and secondary clamp faces 17 and 23 is preferably adjustable, and once the desired position is determined and obtained, is preferably securable in that position. In this manner, clamp faces 17 and 23 can be adjusted for clamping a variety of x-ray sensors, such as exemplary sensor 40 shown in the drawings. In Fig. 5, clamp faces 17 and 23 have been adjusted to physically contact or impinge sensor 40 therebetween.

In order to effect the positioning of clamp faces 17 and 23 with respect to each other second block section 12 is received within first block section 11

The receiving of secondary block section 12 within first block section 11 can be accomplished by any means. One exemplary means includes parallel, spaced and opposing channels 41 between rear walls 14a and 14b of first block section 11 (Fig. 11). Channels 41 are configured to substantially correspond dimensionally to at least one of and preferably both front and rear walls 20 and 21 of second block section 12. As shown by the directional arrows 42 in Fig. 1-3, second block section 12 is moved toward first block section 11 and received within channels 41 thereof. Preferably, second block section 12 is movable within first block section 11, such that the movement causes the space between primary and secondary clamp faces 17 and 23 to be adjusted accordingly. It will be appreciated that primary and secondary clamp faces 17 and 23 are thereby useful for securing a sensor 40 of varying dimensions.

As stated above, it is also preferable to secure the position of primary and secondary clamp faces 17 and 23 in a desired spaced relation. Any means of accomplishing this is within the scope of the invention, including clamps, pins, screws, springs, adhesives, friction fits, or any other such means. One preferred configuration, shown on the drawings, includes stepped ratchet member 50 carried by first block section 11 and second ratchet member 51 carried by second block section 12. Each of said ratchet members 50, 51 includes a plurality of steps or teeth 52, which are substantially similar in dimension. First stepped ratchet member 50 is positioned on the rear 13b (Fig. 11) of front wall 13, such that teeth 52 extend in a direction toward rear wall 14 of first block section 11. Conversely, second ratchet member 51 is preferably carried by front wall 20 of second block section 12 and extend in a direction away from rear wall 21 of second block section 12.

Teeth 52 each have a rise 53 and a run 54 (Fig. 2). When first and second block section 11 and 12 are brought together as described above, a rise 54 of a tooth 52 of first ratchet member 50, and a rise 54 of a tooth 52 of second ratchet member 51, will each slide by an opposing tooth 52. Bite block 10 is preferably made from a plastic material, chosen in part such that at least portions of bite block 10 are substantially resilient, including teeth 52. Once at least one tooth 52 of first ratchet member 50 has been caused to slide past at least one tooth 52 of second ratchet member 51, then opposing runs 54 of the corresponding teeth 52 are caused to physically engage. This engagement substantially prevents reciprocal movement of ratchet members 50 and 51 in an opposite direction, and hence, prevents disengagement of first block section 11 and second block section 12. It is envisioned that due to its resiliency, teeth 52 may be temporarily deformed to allow reciprocal movement, but until and unless such deformation occurs, the disengagement of physically contacted opposing runs 53 is prevented. Thus, primary and secondary clamp faces 17 and 23 are locked in that position. Movement of primary clamp faces 17 and 23 towards each other is ultimately limited by physical engagement with sensor 40, thereby clamping sensor 40 therebetween.

It will be appreciated that there is nor requirement when using bite block 10 to forcefully engage sensor 40 with a preconfigured cradle. Thus the problems with previous sensor holders of the forceful engagement with a cradle are avoided.

Bite block 10 is provided with a longitudinal through slot 60 coextensive with sides 15 and 16 and extending therebetween. It has been found that when bite block 10 is positioned within a patient's mouth, and the patient bites down on first block section 11, slot 60 increases the flexibility of first block section 11, and thereby cushions the contact between it and the patient's teeth (not shown). Slot 22 in second block section 12 may also serve this purpose.

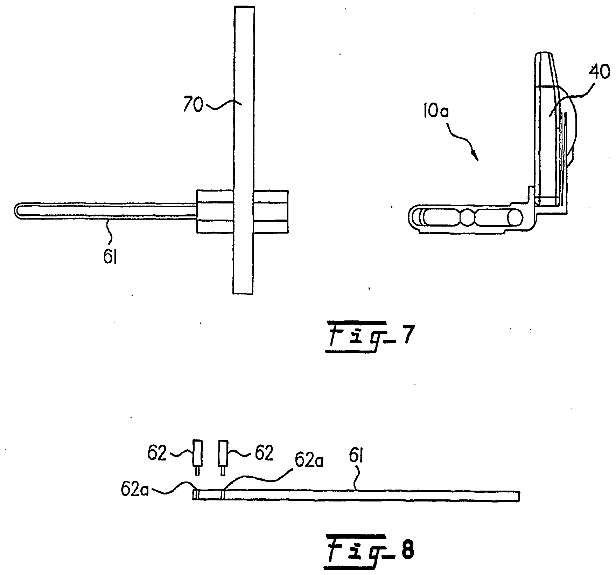

Bite block 10 is configured to also receive a dental X-ray guide arm 61. (Figs. 7 and 8) An exemplary guide arm, and its use with a bite block for taking a dental x-ray is shown in U.S. Pat. No. 3,473,026. Guide arm 61 may be therefore, conventional as known in the art. As shown in Fig. 7, guide arm 61 may be configured to be received within an x-ray tube collimator positioning ring 70 in a conventional manner. Such a ring is shown for example, in U.S. Pat. No. 3,473,026.

Guide arm 61 according to the invention, include pins 62 (Fig. 8) that engage pre-positioned apertures 63 (Figs. 2 and 5) in bite block 10, in a conventional manner. Pins 62 may be affixed to guide arm 61 in any conventional manner, such as inserting pins 62 into apertures 62a in guide arm 61. Pins 62 may be integrally formed with guide arm 61, adhesive, weld or otherwise bonded to guide arm 61, or the like.

It is preferred to configure pins 62 from anodized metal such as aluminum, wherein the anodization process is preselected to provide a specified color. Thereby, the anodizing process results in a pin 62 of a preselected color. Such color selection may be used for identification purposes. Guide arm 61 may be made from a conventional material, such as stainless steel, or it too may be manufactured from an anodized, preselected color material. It is envisioned that the colors will be preselected to match the color of other components involved with the taking of an x-ray, including for example, bite block 10 or ring 70.

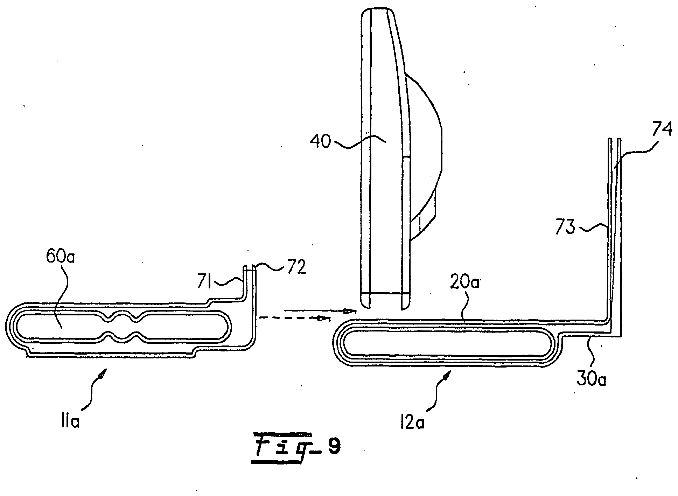

A still further embodiment of a bite block 10 is shown as block 10a in Figs. 7, 9 and 10. In this embodiment, bite block 10a has a web 30a similar to web 30 of bite block 10. Web 30a extends from a second bite block section 12a proximate to a front wall 20a of second block section 12a. First block section 11a of bite block 10a has a through slot 60a that functions in a manner similar to slot 60 of first block section 11. Slot 60a is configured to receive pins 62 of guide arm 61, preferably in a friction fit manner.

As shown in Fig. 10, bite block 10a first block section 11a has a primary clamp face 71 having primary clamp face arms 72. Similarly, second block section 12a has a secondary clamp face 73 having secondary clamp face arms 74.

Based upon the foregoing disclosure, it should now be apparent that the use of the bite blocks described herein will carry out the objects set forth hereinabove. Thus, the scope of the invention shall include all modifications and variations that may fall within the scope of the attached claims.

## Claims

1. A dental x-ray bite block (10) for securing an x-ray sensor having a front side and a back side, comprising
a first block section (11) having a front wall (13), a back wall (14), side walls (15, 16) and a planar primary clamp face abutting in use the front side of the x-ray sensor;
a second block section (12) having a planar secondary clamp face abutting in use the back side of the x-ray sensor;
said first block section (11) configured with receiving means to receive said second block section (12), such that said planar primary and said planar secondary clamp faces are positioned in a spaced, opposing relation when said second block section (12) is received within said first block section (11); and
adjustable securing means for affixing the position of said second block section (12) relative to said first block section (11) when received therein, and wherein said first block section (11) is configured to receive an x-ray guide arm (61) by having at least one lateral aperture (63) in one of said side walls (15, 16) to receive at least one pin (62) carried by said x-ray guide arm, wherein said receiving means includes channel means (41) carried by said first block section (11), wherein said channel means (41) are correspondingly configured to the dimensions of at least a portion of said second block section (12, wherein the front wall (13) of said first block section (11) has an upstanding front wall (13), and said primary clamp face (17) extends substantially perpendicular to said upstanding front wall (13) of said first block section (11), wherein the back wall (14) of said first block section (11) also has an upstanding back wall (14) in a parallel spaced relation to said front upstanding wall (13) of said first block section (11), and a through slot between said front and back upstanding walls (13, 14) of said first block section (11), wherein said second block section (12) has an upstanding front wall, and said secondary clamp face (23) extends substantially perpendicular to said upstanding front wall of said second block section (12).

2. A bite block (10) as in claim 1, wherein said upstanding front wall of said second block section (12) is configured to be received within said channel means (41) of said first block section (11).

3. A bite block (10) as in claim 1, wherein said adjustable securing means includes a stepped ratchet, such that each of said first and second block sections (11, 12) carries a set of corresponding steps, such that said steps are in a spaced, parallel opposing relation when said second block section (12) is received within said first block section (11).

## Patentansprüche

1. Dentalröntgen-Beißblock (10) zum Befestigen eines Röntgensensors, der eine Vorderseite und eine Rückseite aufweist, umfassend:
einen ersten Bockabschnitt (11) der eine vordere Wand (13), eine Rückwand (14), Seitenwände (15, 16) und eine planare primäre Klemmfläche aufweist, die bei Gebrauch an der Vorderseite des Sensors anliegt;
einen zweiten Blockabschnitts (12), der eine planare sekundäre Klemmfläche aufweist, die bei Gebrauch an der Rückseite des Sensors anliegt, wobei der erste Blockabschnitt (11) mit Aufnahmeelementen ausgestaltet ist, um den zweiten Blockabschnitt (12) so aufzunehmen, dass die planaren primären und planaren sekundären Klemmflächen in einer beabstandeten gegenüberliegenden Relation positioniert sind, wenn der zweite Blockabschnitt (12) innerhalb des ersten Blockabschnitts (11), aufgenommen ist, und regulierbare Befestigungsmittel zum Fixieren der Position des zweiten Blockabschnitts (12) relativ zum ersten Blockabschnitt (11), wenn dieser darin aufgenommen ist, und worin der erste Blockabschnitt (11) so ausgestaltet ist, um einen Röntgenstrahlenführungsarm (61) aufzunehmen, indem er mindestens eine seitliche Öffnung (63) in einer der Seitenwände (15, 16) aufweist, um mindestens einen durch den Röntgenstrahlenführungsarm gestalteten Stift aufzunehmen,
worin die Aufnahmeelemente Kanalelemente (41) aufweisen, die durch den ersten Blockabschnitt (11) getragen werden, worin die Kanalelemente (41) den Dimensionen von mindestens einem Teil des zweiten Blockabschnitts (12) entsprechend ausgestaltet sind,
worin die Vorderwand (13) des ersten Blockabschnitts (11) eine aufrechte Vorderwand (13) ist, und die primäre Klemmfläche im wesentlichen senkrecht zu dieser aufrechten Vorderwand (13) des ersten Blockabschnitts (11) verläuft,
worin die Rückwand (14) des ersten Blockabschnitts (11) eine aufrechte Rückwand (14) in parallel beabstandeter Relation zur aufrechten Vorderwand (13) des ersten Blockabschnitts (11) ist, und ein durchgehender ,Spalt zwischen den aufrechten Vorder- und Rückwänden (13, 14) des ersten Blockabschnitts (11) vorhanden ist,
worin der zweite Blockabschnitt (12) eine aufrechte Vorderwand aufweist, und die sekundäre Klemmfläche (23) im wesentlichen senkrecht zur aufrechten Vorderwand des zweiten Blockabschnitts (12) verläuft.

2. Beißblock (10) nach Anspruch 1, worin die aufrechte Vorderwand des zweiten Blockabschnitts (12) so ausgestaltet ist, um innerhalb der Kanalelemente (41) des ersten Blockabschnitts (11) aufgenommen zu werden.

3. Beißblock (10) nach Anspruch 1, worin das regulierbare Befestigungselement ein abgestuftes Sperrelement so umfasst, dass jede der ersten und zweiten Blockabschnitte (11, 12) eine Reihe entsprechender Stufen so trägt, dass die Stufen in einer beabstandeten parallel gegenüberliegenden Relation vorliegen, wenn der zweite Blockabschnitts (12) im ersten Blockabschnitt (11) aufgenommen ist.

## Revendications

1. Bloc à mordre (10) de radiologie dentaire pour fixer un capteur de rayons X comportant un côté avant et un côté arrière, comprenant :
une première section de bloc (11) comportant une paroi avant (13), une paroi arrière (14), des parois latérales (15, 16) et une face de serrage principale plane butant, à l'utilisation, contre le côté avant du capteur de rayons X ;
une deuxième section de bloc (12) comportant une face de serrage secondaire plane butant, à l'utilisation, contre le côté arrière du capteur de rayons X ;
ladite première section de bloc (11) étant configurée avec des moyens de réception pour recevoir ladite deuxième section de bloc (12), de manière que lesdites faces de serrage principale et secondaire planes soient positionnées opposées et espacées lorsque ladite deuxième section de bloc (12) est reçue au sein de ladite première section de bloc (11) ; et
des moyens de fixation réglables pour fixer la position de ladite deuxième section de bloc (12) par rapport à ladite première section de bloc (11) lorsque reçue en son sein, et
ladite première section de bloc (11) étant configurée pour recevoir un bras (61) de guidage de rayons X en comportant au moins une ouverture transversale (63) dans l'une desdites parois latérales (15, 16) pour recevoir au moins une tige (62) supportée par ledit bras de guidage de rayons X ;
lesdits moyens de réception comprenant des moyens formant canaux (41) supportés par ladite première section de bloc (11), lesdits moyens formant canaux (41) étant configurés en correspondance des dimensions d'au moins une partie de ladite deuxième section de bloc (12) ;
la paroi avant (13) de la première section de bloc (11) comportant une paroi avant dressée (13), et ladite face de serrage principale s'étendant sensiblement perpendiculairement à ladite paroi avant dressée (13) de ladite première section de bloc (11) ;
la paroi arrière (14) de ladite première section de bloc (11) comportant également une paroi arrière dressée (14) espacée et parallèle par rapport à ladite paroi avant dressée (13) de ladite première section de bloc (11), et une fente traversante entre lesdites parois dressées avant et arrière (13, 14) de ladite première section de bloc (11) ;
ladite deuxième section de bloc (12) comportant une paroi avant dressée, et ladite face de serrage secondaire (23) s'étendant sensiblement perpendiculairement à ladite paroi avant dressée de ladite deuxième section de bloc (12).

2. Bloc à mordre (10) selon la revendication 1, dans lequel ladite paroi avant dressée de ladite deuxième section de bloc (12) est configurée pour être reçue au sein desdits moyens formant canaux (41) de ladite première section de bloc (11).

3. Bloc à mordre (10) selon la revendication 1, dans lequel lesdits moyens de fixation réglables comprennent un rochet à paliers, de manière que chaque dite première section de bloc et dite deuxième section de bloc (11, 12) supporte un jeu de paliers correspondants, de manière que lesdits paliers soient opposés, parallèles et espacés lorsque ladite deuxième section de bloc (12) est reçue au sein de ladite première section de bloc (11).
